# EUROPEAN PATENT SPECIFICATION

(11) **EP 0 364 640 B1**
(45) Date of publication and mention of the grant of the patent: **04.08.1993**
(21) Application number: 88309912.9
(22) Date of filing: 21.10.1988
(51) Int. Cl.: C04B 35/00, C04B 35/66

(54) **Hard setting refractory composition**
Hart abbindende feuerfeste Zusammensetzung
Composition réfractaire durcissable

(43) Date of publication of application: 25.04.1990
(73) Proprietor: THE CHICAGO FIRE BRICK COMPANY, Chicago Illinois 60622 (US)
(72) Inventor: Rechter, Harold L., Country Club Hills Illinois 60477 (US)
(74) Representative: Heath, Derek James

(56) References cited:
- DE-A- 3 043 856
- FR-A- 2 478 073

## Description

The invention relates to hard setting refractory compositions and especially to rapid hard setting castable refractory compositions comprising fumed silica and a refractory material, such as one containing alumina, which when mixed with water will set to a hard mass at normal outdoor temperatures without any calcareous cementious material being present in the composition.

Calcareous cements that contain fumed silica and are rapid setting are known as shown in US-A-4,501,830. Also, US-A-4,506,025 discloses a castable silica brick composition containing fumed silica, fused silica and Portland cement. This composition is relatively slow setting and contains undesirable cement compounds. JP-A-1981-78476 shows a similar castable composition based on the coagulation of superfine silica powder with the Ca ions of Portland cement.

US-A-3,121,641 discloses a castable composition containing alumina and fumed silica and US-A-3,067,050 discloses a gunning mixture containing alumina and fumed silica. However, these compositions do not set quickly to a hard set and must be given a length curing and then fired to obtain suitable strength and hardness.

The present invention is based on our discovery that alkali metal silicates with fumed silica and refractory material when mixed with water will set to a hard mass at normal atmospheric temperatures and even lower. The alkali metal silicates act as reactive reagents or accelerators to initiate and speed up the hardening action of the fumed silica in such compositions. They are effective in such small quantities as 0.2-5% of the mixture.

Accordingly, from one aspect, the invention is directed to an acid-resistant and workable binder for refractory compositions which can be poured or vibrated in place and will set to a hard mass at normal atmospheric temperatures, which binder is substantially free of CaO or calcareous cement and is a mixture of component A consisting of water and fumed silica and component B consisting essentially of an alkali metal phosphate and a particulate alkali metal silicate selected from the group consisting of anhydrous sodium silicate having a molar ratio of SiO₂:Na₂O of 1:1 to 4:1, hydrated sodium silicate having a molar ratio of SiO₂:Na₂O of 3:1 to 4:1, and anhydrous potassium silicate having a molar ratio of SiO₂:K₂O of at least 3:1, and mixtures thereof.

The invention also extends to a refractory composition as set forth in claim 4.

Compositions containing fumed silica and liquid sodium silicates or hydrated sodium silicates having a molar ratio of SiO₂:Na₂O of 1:1 have a very rapid or flash set and are impractical for most uses since they cannot be uniformly mixed before setting, but they can be used for filling holes, patching and the like.

The binding mechanisms of alkali metal silicates with fumed silica can be employed with a great variety of formulations, preferably those containing alumina such as bauxite, and high alumina materials. Other material used in refractory applications such as calcined clay, silicon carbide, magnesia, spinel, refractory grog, fused silica, zircon and zirconia may be used. This includes formulations for placement by gunning and shotcreting application, as well as by casting.

One advantage of this invention is that it is not necessary to use calcareous cements or lime.

It is also an aim of this invention to provide refractory cast products that can be installed with less concern for curing procedures and put into service soon after hardening.

It is a further aim of this invention to provide more predictable and reliable properties than is often the case with complex calcium aluminate cement systems.

A preferred composition to harden both cast and gunning materials comprises fumed silica in from 3-30% of the total refractory composition, powdered anhydrous sodium silicate with a silica to soda ratio of 1:1 to 4:1 in the range of 0.2-5% of the total mix, and a major amount of refractory aggregate comprising alumina. When the anhydrous sodium silicate is replaced with hydrated sodium silicate, the molar ratio of SiO₂:Na₂O for similar results should be 3:1 to 4:1. With anhydrous potassium silicate, the molar ratio of SiO₂:K₂O should be at least 3:1. Alternatively, a combination of anhydrous and hydrated sodium silicates can be used with the ratio of anhydrous to hydrated silicates being 3:1 and the total sodium silicate percentage being about 0.6% to 1.0% of the mixture.

With refractory compositions comprising a refractory aggregate, fumed silica and an alkali metal silicate, a minor amount of an alkali metal phosphate (as low as $\frac{\text{1}}{\text{2}}$% and even less) is helpful in giving improved flow characteristics to the casting composition. For example, polyphosphates such as sodium hexametaphosphate are helpful in approximately 0.1 to 1.0% by weight of the total composition.

Castables and gunning formulations may be made without the inclusion of calcareous cementious components using fumed silica as the sole binder. This is made feasible by my discovery that the addition of alkali metal silicate reagents to the fumed silica promotes a hardening reaction even without CaO similar to that common to Portland cement products. For casting, the dry mix is tempered with clean water and can be poured and vibrated into place, or troweled, in the normal manner. However, since these are relatively dense due to the low water requirement, they must be mixed a few minutes longer and are somewhat stickier on pouring. When placed they should not be misted with water, covered, sealed or in any way prevented from drying out. Gunning requires no special procedures. After the forms are stripped, the cast or gunned products can be allowed to dry out, even by the application of mild heat, and allowed to set. Shortly after setting, these products, unlike refractory or Portland cement products, can be fired or otherwise uniformly exposed to high heat without harm to the products.

Several examples of formulations which embody this invention are given in the following examples.

### EXAMPLE 1

A refractory castable was formulated as follows:

| | | Sieve Opening. | Mesh |
|---|---|---|---|
| 35.4% | Mulcoa 60 | 4.75 mm | 4 |
| 26.6% | Bauxite | 1.70 mm | 10 |
| 17.7% | Fused alumina | 44 µm | 325 |
| 8.9% | Calcined alumina | 44 µm | 325 |
| 11.1% | Fumed silica (spherical particles average 0.15 microns) | | |
| 0.3% | Sodium Silicate (Portil N) | 75 µm | 200 |
| 0.1% | Sodium hexametaphosphate | | |

Mulcoa 60 is a calcined kaolin product of the C.E. Minerals Company, containing about 60% alumina. The bauxite may be South American, Chinese or a blend of calcined bauxite.

The sodium silicate of the above example (Portil N) was in the weight ratio of SiO₂ to Na₂O of 3.22:1, and is a hydrated sodium silicate of about 14% water of hydration. Henkel KGaA in Germany markets Portil N. The 0.3% level of sodium silicate allows adequate working time to cast the material. Larger grain size reagents having this ratio are also available. Philadelphia Quartz Company's SS-20 and SS-65 are anhydrous sodium silicates of SiO₂:Na₂O ratio of 3.2:1 that can be used in higher levels of sodium silicate because of their lower reactivity. In combination or singly, the range of silicate powders can preferably span from .2% to 1.5% of castables and up to 5% of gun mixes. The limitation on the latter is to avoid a high level of alkali inclusion and a rapidity of set which can complicate clean up procedures.

To mix, 4 to 4$\frac{\text{1}}{\text{2}}$% water can be put into the mixer first or added to the dry castable. A minimum of five minutes mixing time is used to develop a casting consistency. Internal and external vibrators are both useful for good placement. However, the high densities obtained with these low water requirements make external vibration more effective when practical. Shortly after the material sets, normally within an hour, forms can usually be removed. At this point, it can be gently heated or placed in an oven for drying and then uniformly heated at high temperatures and even fired. Strong direct flames should be avoided until considerable drying has taken place, or until 48 hours have elapsed if no other source of heat has been used.

### EXAMPLE 2

A series of castables were formulated as follows:

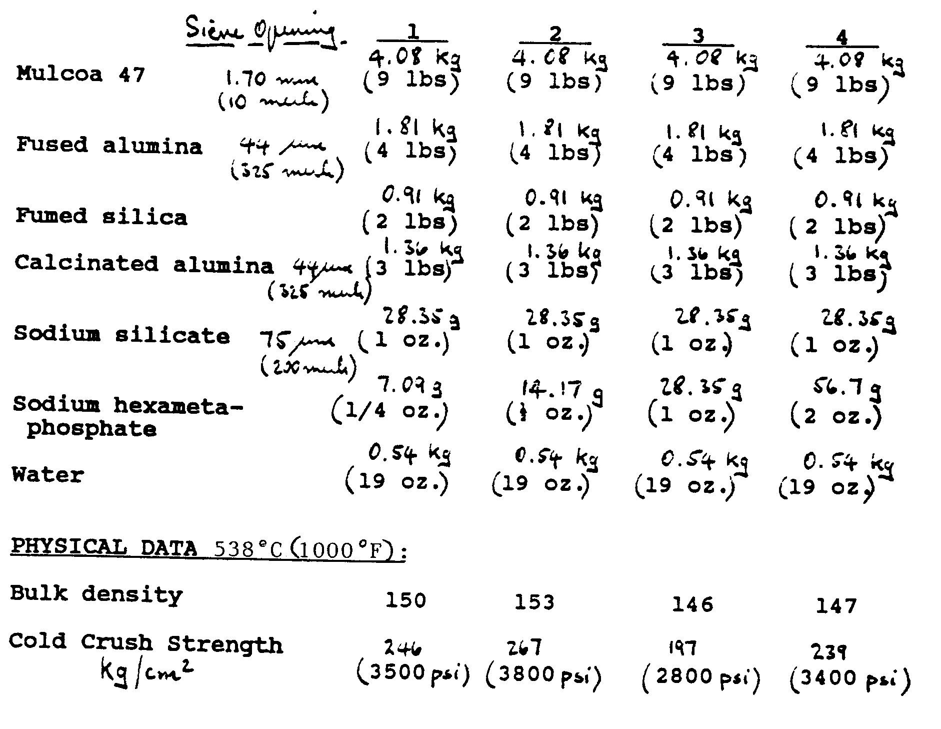

This data shows the effect of varying sodium hexametaphosphate (SHMP). The level of Test 2 was optimal, about 0.2%. The sodium silicate in all the above tests was in powder form and had a weight ratio of SiO₂ to Na₂O of approximately 3.22:1.

### EXAMPLE 3

A blend was made of 4.08 kg (9 lbs.), of calcined Missouri flint clay, -0.159 cm (-1/16 inch), 1.81 kg (4 lbs.) of 325 mesh (sieve opening 44 µm) fused alumina fines, 0.91 kg (2 lbs.) of fumed silica, 0.91 kg (2 lbs.) of 35 mesh (sieve opening 425 µm) raw kyanite, and 14.17 g ($\frac{\text{1}}{\text{2}}$ oz.) of SHMP. To this was added several levels of 200 mesh (sieve opening 75 µm) hydrated sodium silicate (Portil N), of a weight ratio of SiO₂:Na₂O if 3.22:1 (approximately molar rate of 3:1). All were cast with 539-567 g (19-20 oz.) water (about 6%). Results were as follows:

| Portil N weight in g | % | Work Time In Minutes | 538°C (1000°F) Cold Crush Strength kg/cm² |
|---|---|---|---|
| 0 | 0 | No Set | - |
| 14.17 (1/2 oz) | 0.16 | Skin, no hard set | - |
| 21.26 (3/4 oz) | 0.23 | 130 | - |
| 28.35 (1 oz) | 0.31 | 18 | 267 (3800 psi) |
| 56.7 (2 oz)) | 0.62 | 8 | 450 (6400 psi) |
| 85.05 (3 oz) | 0.94 | 7 | 520 (7400 psi). |
| 113.4 (4 oz) | 1.25 | Flash set | - |

The flash set can be avoided by adding most of the Portil N at the end of the mix just prior to casting. Coarser sized silicates, such as Philadelphia Quartz' SS-20 and SS-65 can be used initially but preferably not above 1.5% in most cases, or added just prior to casting. Levels above 0.5% of any of the powders are not recommended as initial blends with formulations of 85% alumina and above.

Formulations containing graphite, silicon carbide, chromium oxide, zirconia, and zircon have all been made and are usable with this method of bonding. Silicon metal additions are useful with graphite and silicon carbide to promote higher strengths and oxidation resistance. However, the use of powdered metals and even iron ball milled raw materials can produce hydrogen gas in amounts sufficient to be of concern.

### EXAMPLE 4

The following formulation is an example of a gunning mix using this novel bonding system.

| | | |
|---|---|---|
| 15 parts | Calcined bauxite | 0.635 by 0.159 cm (1/4 by 1/16 inch) |
| 65 parts | Calcined bauxite | 0.159 cm (1/16 inch) |
| 5 parts | Fumed silica | |
| 10 parts | Raw kyanite | 100 mesh (sieve opening 150 µm) |
| 5 parts | Ball clay | |
| 1 part | Sodium silicate | (Portil N) |

This product gunned with little rebound or dusting and required less water than conventional gunning materials. A higher level of silicate accelerator is used than with ordinary castables to promote fast hardening to prevent any tendency to slump. The practical limit is at about 5% to avoid excessive sodium content (a flux). SHMP is not needed in the gunning mixes.

Many other aggregates can be used, such as calcined clays, fused and tabular aluminas, etc. Additives such as carbons, silicon carbide, chrome oxide, zirconia and zircon can be advantageous in this system. Metal powders such as silicon are beneficial to properties but may produce hydrogen.

The level of fumed silica was also investigated. A practical lower limit of 5% produces good strengths and reasonably low water requirements, and is preferred for high alumina castables and in gun mixes (where higher levels are dust producing). The 10% level has been found overall to be adequate and optimal in most cases for castables. Levels of 15-25% impart an undesirable stickiness and water requirements climb. Silica contents may be rather high at the higher levels. However, the entire range from about 3% to 30% fumed silica is viable for this bonding mechanism.

Fine powdered sodium silicates most useful have roughly 63% SiO₂, 19% Na₂O, and 18% H₂O corresponding to a molar ratio of SiO₂:Na₂O of approximately 3:1. The two coarser silicates, namely Philadelphia Quartz Company's SS-20 and SS-65, are essentially anhydrous, containing roughly 75% SiO₂ and 23% Na₂O. As stated, these also work, but preferably at higher concentration levels.

Compositions were tested with potassium silicate molar ratio of SiO₂:K₂O of about 3:1 (Portil Potassium) from Henkel KGaA containing 56% SiO₂, 28% K₂O, and 16% H₂O. In this hydrated form, this reagent is too readily soluble and caused an almost instant setting reaction. This material was dehydrated by calcinating at about 1300°F for about 18 hours and grinding to -65 mesh. This material was substantially free of all water. This treatment produced a successful result, as described in the following example.

### EXAMPLE 5

A blend of 5.44 kg (12 lbs.) of 0.635 cm (1/4 inch) and down of Mulcoa 47 brand calcined clay, 0.907 kg (2 lbs.) of fumed silica, 1.81 kg (4 lbs.) of 325 mesh (sieve opening 44 µm) alumina fines, 0.907 kg (2 lbs.) of 100 mesh (sieve opening 150 µm) kyanite, 14.17 g (1/2 oz.) of SHMP, and 35.44 g 1-1/4 oz.) of dehydrated potassium silicate, 65 mesh (sieve opening 212 µm), was mixed with 0.567 kg (1 lb. 4 oz.) water. This was a good working castable. The working time prior to an initial set was about 8 minutes, somewhat less than that obtained with the sodium compound. Dried cold crush strengths after about 20 hours at 104°C (220°F) averaged 267 kg/cm² (3,800 psi.).

Anhydrous potassium silicate of a weight ratio of SiO₂ to K₂O of 2:1 (molar ratio of 3:1) is manufactured by the Philadelphia Quartz Company as Kasil SS Powder, and gives the same results as the above dehydrated material.

The following shows the results of studies on the effect of reagent ratios (and corresponding molar ratios) of SiO₂:Na₂O and SiO₂:K₂O with and without hydration of the silicates on the working time for mixing with water to obtain a set.

| | Sieve opening | Amount in Kg |
|---|---|---|
| Calcined clay (Mulcoa 47) | 6.7 mm x 2.36 mm (3x8 mesh) | 3.18 (7 lbs.) |
| Calcined clay (Mulcoa 47) | 2.36 mm (8 mesh) | 2.27 (5 lbs.) |
| Fumed silica | | 0.91 (2 lbs.) |
| Fused alumina fines | 44 µm (325 mesh) | 1.81 (4 lbs.) |
| Raw kyanite | 150 µm (100 mesh) | 0.91 (2 lbs.) |
| Sodium hexametaphosphate | | 0.014 (1/2 oz.) |

To this was added several alkali silicate additions as shown in the following table with differing SiO₂:Na₂O and K₂O ratios both hydrated and anhydrous. The results are as indicated:

| Silicate | Weight Ratio | Addition in g | Hydrate | Working Time | Cold Crush after 110°C (after 230°F) in kg/cm² |
|---|---|---|---|---|---|
| Sodium | 3.2:1 | 28.35 (1.oz.) | yes | 30 min. | 267 (3800 psi) |
| | 3.2:1 | 85.1 (3 oz.) | no | 60 min. | 492 (7000 psi) |
| | 2:1 | 28.35 (1 oz.) | yes | flash set | - |
| | 2:1 | 28.35 (1 oz.) | no | 90 min. | 443 (6300 psi) |
| | 2:1 | 56.7 (2 oz.) | no | 12 min. | 541 (7700 psi) |
| | 1:1 | 28.35 (1 oz.) | yes | flash set | - |
| | 1:1 | 56.7 (2 oz.) | no | 15 min. | 155 (2200 psi) |
| Potassium | 2:1 | 32 | yes | flash set | - |
| | 150 mesh (sieve opening 106 µm) | | | | |
| | 2:1 | 28.35 (1 oz.) | yes | 04 min. | 260 (3700 psi) |
| | 40 mesh (sieve opening 425 µm) | | | | |
| | 2:1 | 34 | no | 08 min. | 260 (3700 psi) |
| | 2.5:1 | 28.35 (1 oz.) | no | 90 min. | 471 (6700 psi) |
| | 2.5:1 | 113.4 (4 oz.) | no | 05 min. | 436 (6200 psi) |

All ratios tested can work. In the hydrated form, the lower ratio materials would set too rapidly for casting. They could all be used for gunning. All of the castables were tested for about 6% water. The silicates were all in powder form.

The percent amounts given in the specification and claims are all weight percents.

The mesh amounts are Tyler screen sizes.

### EXAMPLE 6

The hydrated sodium silicates, such as Portil N, are more difficult to control because they tend to act more quickly as setting agents. The more controllable anhydrous silicates, such as Philadelphia Quartz' SS-65, however, tend to hydrate during storage. It has been discovered that these two setting agents, or bonding accelerators, can be mixed and used in combination. For example, adding hydrated silicates as 0.2% and anhydrous silicates as 0.6% of the total refractory mixture provides a highly predictable set, and has the additional benefit of reducing the sodium content as compared to a mixture with only an anhydrous setting agent.

The following samples were prepared to evaluate the acid resistance of refractory castables made in accordance with the present invention.

| | 6A | 6B | 6C |
|---|---|---|---|
| Calcined Missouri Clay - coarse | 42.0 | 37.4 | 09.1 |
| -1/16 firebrick grog | 14.0 | 28.0 | 09.8 |
| Pulverized grog | 18.7 | ---- | 29.4 |
| Fumed silica | 09.4 | 09.4 | 09.8 |
| 50 mesh sand (sieve opening 300 µm) | 14.0 | ---- | ---- |
| 325 mesh calcined alumina | ---- | 23.4 | ---- |
| SS-65 (sieve opening 44 µm) | 01.8 | 01.8 | 01.9 |
| SHMP | 00.14 | 00.14 | 00.15 |
| Water | 08.8 | 08.5 | 08.9 |

The SS-65 level was high to expedite the sample preparation, but much lower levels, other additives, or other combinations of additives can no doubt be used to adjust the setting time of the mixture. The cubes were dried at 104°C (220°F.). One set of three of each was left in the dryer and another set of three was placed in the muriatic acid for four days. The exposed specimens were washed off and dried in the oven. Cement bearing castables are destroyed by this concentrated commercial acid, which is used in various applications, such as cleaning refractory surfaces. The results after drying were as follows:

| | No. 6A | No. 6B | No. 6C |
|---|---|---|---|
| Density - kg/m³(lbs/cu ft) | 2050 (128) | 2323 (145) | 2115 (132) |
| Cold crush strength acid treated - kg/cm² | 309 (4400 psi) | 632 (9000 psi) | 344 (4900 psi) |
| Cold crush strength no acid - kg/cm² | 309 (4400 psi) 738 | (10500 psi) 422 | (6000 psi) |

As can be seen from the above results, the samples were only slightly effected by the very thorough exposure to the acid. The lack of lime in the cementless castables imparts total acid resistance making suitable formulations useful for masonry in many chemical exposure applications. These may be non-refractory in nature as long as lime bearing aggregates are avoided. The castables need to be heat dried, making precast and dried shapes more practical, perhaps, than cast in place floors and walls. However, heating to dryout temperatures is not difficult.

The ratios given in the specification and Claims are molar ratios except where specifically indicated as weight ratios. The weight and molar ratios for the sodium silicate are substantially the same and the 2:1 weight ratios for the potassium silicate is approximately a 3:1 molar ratio.

The term fumed silica is also known in the trade as volatized silica, arc silica and silica fume. A typical analysis including particle size of silica fume is shown in US-A-4,310,486.

## Claims

1. An acid-resistant and workable binder for refractory compositions which can be poured or vibrated in place and will set to a hard mass at normal atmospheric temperatures, which binder is substantially free of CaO or calcareous cement and is a mixture of component A consisting of water and fumed silica and component B consisting essentially of an alkali metal phosphate and a particulate alkali metal silicate selected from the group consisting of anhydrous sodium silicate having a molar ratio of SiO₂:Na₂O of 1:1 to 4:1, hydrated sodium silicate having molar ratio of SiO₂:Na₂O of 3:1 to 4:1, and anhydrous potassium silicate having a molar ratio of SiO₂:K₂O of at least 3:1, and mixtures thereof.

2. A binder in accordance with Claim 1, wherein the alkali metal silicate is a mixture of anhydrous and hydrated material.

3. A binder in accordance with Claim 2, wherein the silicates are mixed in a ratio of about 3 parts anhydrous silicate to 1 part hydrated silicate.

4. A refactory composition which is substantially free of CaO or calcareous cement and which, when mixed with water, can be poured or vibrated in place and will set to a hard mass at normal atmospheric temperatures, the composition consisting essentially of an aggregate, fumed silica and a particulate alkali metal silicate selected from the group consisting of anhydrous sodium silicate having a molar ratio of SiO₂:Na₂O of 1:1 to 4:1, hydrated sodium silicate having a molar ratio of SiO₂:Na₂O of 3:1 to 4:1, and anhydrous potassium silicate having a molar ratio of SiO₂:K₂O of at least 3:1, and mixtures thereof.

5. A refractory composition in accordance with Claim 4, in which the alkali metal silicate is present in 0.2% to 1.5% of the composition.

6. A refractory composition in accordance with Claim 4, in which the aggregate is in a major amount and the fumed silica is in a minor amount.

7. A refractory composition in accordance with Claim 4, in which the aggregate is selected from the group consisting of calcined clay, alumina, magnesia, zircon, zirconia, silica, fused silica, silicon carbide, spinel, refractory grog, metallic materials and mixtures thereof.

8. A refractory composition in accordance with Claim 4, in which the fumed silica is present in 3-30% by weight of the refractory composition, and the alkali metal silicate is present in 0.2-1.5% by weight of the composition.

9. A castable composition in accordance with Claim 4 which also contains sodium hexametaphosphate in an amount of 0.1-1.0% by weight of the composition.

## Patentansprüche

1. Gegen Säure widerstandsfähiges und bearbeitbares Bindemittel für feuerfeste Mischungen, welche an Ort und Stelle gegossen oder mit Vibratoren behandelt werden können, und welche zu einer harten Masse bei normalen Umgebungstemperaturen abbinden, wobei das Bindemittel im wesentlichen frei von CaO oder kalkhaltigem Zement ist und aus einer Mischung aus einem Bestandteil A, bestehend aus Wasser und geräuchertem Silika, und einem Bestandteil B besteht, welcher im wesentlichen aus einem Alkalimetallphosphat und einem teilchenförmigen Alkalimetallsilikat besteht, welches aus der aus wasserfreiem Natriumsilikat mit einem Molarverhältnis an SiO₂:Na₂O von 1:1 bis 4:1, hydriertem Natriumsilikat mit einem Molarverhältnis an SiO₂:Na₂O von 3:1 bis 4:1 und wasserfreiem Kaliumsilikat mit einem Molarverhältnis an SiO₂:K₂O von mindestens 3:1 und Mischungen derselben bestehenden Gruppe gewählt wird.

2. Bindemittel nach Anspruch 1, wobei das Alkalimetallsilikat eine Mischung aus wasserfreiem und hydriertem Material ist.

3. Bindemittel nach Anspruch 2, wobei die Silikate in einem Verhältnis von etwa drei Teilen wasserfreiem Silikat zu einem Teil hydriertem Silikat gemischt sind.

4. Feuerfeste Mischung, welche im wesentlichen frei von CaO oder kalkhaltigem Zement ist, und welche nach Mischen mit Wasser gegossen oder an Ort und Stelle einer Vibrationsbehandlung ausgesetzt werden kann, und welche zu einer harten Masse bei normalen Umgebungstemperaturen abbindet, wobei die Mischung im wesentlichen aus einem Zuschlagstoff, geräuchertem Silika und einem teilchenförmigen Alkalimetallsilikat besteht, welches aus der aus wasserfreiem Natriumsilikat mit einem Molarverhältnis an SiO₂:Na₂O von 1:1 bis 4:1, hydriertem Natriumsilikat mit einem Molarverhältnis an SiO₂:Na₂O von 3:1 bis 4:1 und wasserfreiem Kaliumsilikat mit einem Molarverhältnis an SiO₂:K₂2O von mindestens 3:1 und Mischungen dieser Stoffe bestehenden Gruppe gewählt wird.

5. Feuerfeste Mischung nach Anspruch 4, bei welcher das Alkalimetallsilikat in Mengen von 0,2% bis 1,5% der Mischung vorhanden ist.

6. Feuerfeste Mischung nach Anspruch 4, bei welcher der Zuschlagstoff in einer größeren Menge und das geräucherte Silika in einer kleineren Menge vorliegt.

7. Feuerfeste Mischung nach Anspruch 4, in welcher der Zuschlagstoff aus der aus gebranntem Ton, Tonerde, Magnesia, Zirkon, Zirkonerde, Silika, geräuchertem Silika, Siliciumkarbid, Spinell, Ziegelstaub aus feuerfesten Ziegeln, metallischen Materialien und Mischungen dieser Stoffe bestehenden Gruppe gewählt wird.

8. Feuerfeste Mischung nach Anspruch 4, in welcher das geräucherte Silika in Mengen von 3 bis 30 Gewichtsprozent der feuerfesten Mischung und das Alkalimetallsilika in Mengen von 0,2 bis 1,5 Gewichtsprozent der Mischung vorliegt.

9. Gießbare Mischung nach Anspruch 4, in welcher ferner Natriumhexametaphosphat in einer Menge von 0,1 bis 1,0 Gewichtsprozent der Mischung vorliegt.

## Revendications

1. Liant résistant aux acides et usinable pour des compositions réfractaires qui peuvent être versées ou mises en place par vibrations et qui prennent en une masse dure aux températures atmosphériques normales, liant qui est pratiquement dépourvu de CaO ou de ciment calcaire et qui est un mélange d'un constituant A consistant en eau et en silice ultrafine et d'un constituant B consistant essentiellement en un phosphate de métal alcalin et un silicate de métal alcalin en particules choisi dans le groupe consistant en un silicate de sodium anhydre ayant un rapport molaire SiO₂:Na₂O de 1:1 à 4:1, un silicate de sodium hydraté ayant un rapport molaire SiO₂:Na₂O de 3:1 à 4:1 et un silicate de potassium anhydre ayant un rapport molaire SiO₂:K₂O d'au moins 3:1, et leurs mélanges.

2. Liant suivant la revendication 1, dans lequel le silicate de métal alcalin est un mélange d'une matière anhydre et d'une matière hydratée.

3. Liant suivant la revendication 2, dans lequel les silicates sont mélangés en un rapport d'environ 3 parties de silicate anhydre à 1 partie de silicate hydraté.

4. Composition réfractaire qui est pratiquement dépourvue de CaO ou de ciment calcaire et qui, lorsqu'elle est mélangée à de l'eau, peut être versée ou mise en place par vibrations et qui prend en une masse dure aux températures atmosphériques normales, composition consistant essentiellement en un agrégat, une silice ultrafine et un silicate de métal alcalin en particules choisi dans le groupe consistant en un silicate de sodium anhydre ayant un rapport molaire SiO₂:Na₂O de 1:1 à 4:1, un silicate de sodium hydraté ayant un rapport molaire SiO₂:Na₂O de 3:1 à 4:1 et un silicate de potassium anhydre ayant un rapport molaire SiO₂:K₂O d'au moins 3:1, et leurs mélanges.

5. Composition réfractaire suivant la revendication 4, dans laquelle le silicate de métal alcalin est présent en une quantité de 0,2 % à 1,5 % de la composition.

6. Composition réfractaire suivant la revendication 4, dans laquelle l'agrégat est présent en une quantité dominante et la silice ultrafine est présente en une quantité secondaire.

7. Composition réfractaire suivant la revendication 4, dans laquelle l'agrégat est choisi dans le groupe consistant en une argile calcinée, l'alumine, la magnésie, le zircon, la zircone, la silice, la silice fondue, le carbure de silicium, un spinelle, une matière réfractaire moulue, des matières métalliques et leurs mélanges.

8. Composition réfractaire suivant la revendication 4, dans laquelle la silice ultrafine est présente en une quantité de 3 à 30 % en poids de la composition réfractaire et le silicate de métal alcalin est présent en une quantité de 0,2 à 1,5 % en poids de la composition.

9. Composition apte à être coulée suivant la revendication 4, qui contient également de l'hexamétaphosphate de sodium en une quantité de 0,1 à 1,0 % en poids de la composition.
